(19) **Europäisches Patentamt / European Patent Office / Office européen des brevets**

(11) **EP 1 565 736 B1**

(12) # EUROPEAN PATENT SPECIFICATION

(45) Date of publication and mention
of the grant of the patent:
**24.01.2007 Bulletin 2007/04**

(51) Int Cl.:
***G01N 27/333*** (2006.01)

(21) Application number: **03811811.3**

(22) Date of filing: **21.11.2003**

(86) International application number:
**PCT/GB2003/005114**

(87) International publication number:
**WO 2004/048960 (10.06.2004 Gazette 2004/24)**

(54) **MULTI-IONOPHORE MEMBRANE ELECTERODE**

MULTIIONOPHORE MEMBRANELEKTRODE

ELECTRODE A MEMBRANE A IONOPHORES MULTIPLES

(84) Designated Contracting States:
**DE FR GB**

(30) Priority: **28.11.2002 GB 0227810**

(43) Date of publication of application:
**24.08.2005 Bulletin 2005/34**

(73) Proprietor: **DREW SCIENTIFIC CO. LIMITED**
**Dallas, Texas 75237-1023 (US)**

(72) Inventors:
- **SLATER, Jonathan, M.,**
  **Birbeck University of London**
  **Bloomsbury,**
  **London WC1H 0PP (GB)**
- **MURPHY, Lindy,**
  **Birbeck University of London**
  **Bloomsbury,**
  **London WC1H 0PP (GB)**

(74) Representative: **McCluskie, Gail Wilson et al**
**J.A. Kemp & Co.,**
**14 South Square,**
**Gray's Inn**
**London WC1R 5JJ (GB)**

(56) References cited:

- **BAKKER E ET AL: "ION-SELECTIVE ELECTRODES BASED ON TWO COMPETITIVE IONOPHORES FOR DETERMINING EFFECTIVE STABILITY CONSTANTS OF ION-CARRIER COMPLEXES IN SOLVENT POLYMERIC MEMBRANES" ANALYTICAL CHEMISTRY, AMERICAN CHEMICAL SOCIETY. COLUMBUS, US, vol. 70, no. 2, 15 January 1998 (1998-01-15), pages 295-302, XP000733212 ISSN: 0003-2700 cited in the application**
- **JADHAV S ET AL: "Selectivity behavior and multianalyte detection capability of voltammetric ionophore-based plasticized polymeric membrane sensors." ANALYTICAL CHEMISTRY. UNITED STATES 1 JAN 2001, vol. 73, no. 1, 1 January 2001 (2001-01-01), pages 80-90, XP002272237 ISSN: 0003-2700**
- **SANG HYUN HAN ET AL: "POTENTIOMETRIC DETECTION IN ION CHROMATOGRAPHY USING MULTI-IONOPHORE MEMBRANE ELECTRODES" JOURNAL OF CHROMATOGRAPHY A, ELSEVIER SCIENCE, NL, vol. 648, 1993, pages 283-288, XP002950980 ISSN: 0021-9673**
- **FORSTER R J ET AL: "NONLINEAR CALIBRATION OF ION-SELECTIVE ELECTRODE ARRAYS FOR FLOW INJECTION ANALYSIS" ANALYTICAL CHEMISTRY, vol. 64, no. 15, 1992, pages 1721-1728, XP002272238 ISSN: 0003-2700 cited in the application**
- **BAKKER ERIC: "Hydrophobic membranes as liquid junction-free reference electrodes" ELECTROANALYSIS, vol. 11, no. 10-11, July 1999 (1999-07), pages 788-792, XP008028219 ISSN: 1040-0397 cited in the application**

**Description**

**Background of the invention**

The invention provides the use of a sensor with a polymeric membrane for ion sensitive measurement as a pseudo reference sensor.

**Introduction**

The determination of ionic species in samples such as blood using ion selective electrodes is routinely performed with conventional multi-use flow-through analysers and more recently with single-shot or limited re-use disposable sensor cartridges. The former typically make use of a conventional silver/silver chloride reference electrode in a highly concentrated equitransferant solution (typically 3M KCl) with a free-flowing liquid junction or with a diffusion limited junction such as a frit, while the latter often include microfabricated silver/silver chloride electrodes with some surface layer, such as a hydrogel containing a relatively constant concentration of chloride ion. The interface at which the sample and the reference solution or gel meet provides a liquid junction potential. The variable nature of blood or other samples can cause unquantifiable variations in the liquid junction potential, which can give rise to significant errors. Providing a reference electrode that has no liquid junction would eliminate the liquid junction potential, and could reduce the amount of sample required, due to closer proximity of the sensors and the reference electrode. In addition, a disposable reference electrode of this type could simplify the fabrication of disposable sensor cartridges and the design of conventional flow through analysers. A disposable reference electrode could be used in the medical field or in other areas where potentiometric sensing is used, such as environmental monitoring.

Polymeric membrane electrodes have been used in liquid junction-free reference electrodes (Bakker[8]). Mi et al.[5] describe a poly-ion selective electrode, based on the anion exchanger tridodecylmethylammonium chloride. Prolonged exposure to the polyanionic anticoagulant Liquoid resulted in a sensor that was largely unresponsive to chloride ions, due to replacement of the chloride ions by the polyanion species. It was suggested the sensor could be used as a reference electrode for the measurement of small cations in blood containing polyanionic anticoagulant. However prolonged exposure to the polyanion species is required to ensure complete replacement of the chloride ions before use.

A reference electrode composed of two parallel membranes, one responding to anions and the other to cations has been described by Morf and Rooij[3] and by Eine et al.[4] If the responses of the two membranes are equal, the potential contributions from the two membranes cancel out and the electrode can act as a reference electrode. The use of the electrode as a reference electrode is limited due to non-equivalence of the slopes of response to the cations and anions in real samples.

Lee et al.[6] have reported a polyurethane membrane containing both anion and cation exchangers, which is virtually unresponsive to many ions or pH and provides an approximately constant potential, enabling it to be used as a reference electrode. The polyurethane is thought (Bakker[8]) to be acting as a low permeability membrane to the inner filling solution, which would render the electrode ineffective at high sample ion concentrations.

In potentiometric measurements with ion selective sensors, the response of an ion sensitive sensor is usually measured relative to the response of a conventional reference electrode, where the conventional reference electrode has a constant response during a measurement and any variation in response of the conventional reference electrode will lead to an error. A pseudo reference electrode may be used as an alternative to a conventional reference electrode, where the pseudo reference electrode has a variable response during the measurement and where said response is due to one or more species and behaves in a predictable manner. The pseudo reference electrode referred to herein responds to a plurality of species.

The response of an ion sensitive sensor (which is responsive to only one of the plurality of species) measured relative to the response of the pseudo reference electrode also behaves in a predictable and measurable manner. Pseudo reference sensor refers to the use of a pseudo reference electrode responsive to a plurality of species in combination with one or more sensors sensitive to one of the plurality of species.

Electrodes including conventional polymeric ion selective membranes containing more than one ionophore are known for specific applications other than pseudo-reference electrodes.

The use of a multi-ionophore membrane containing four ionophores, selective for sodium, potassium, calcium and ammonium ions as a multi-ion detector in ion chromatography has been reported by Lee et al.[7] No theoretical description of the response is provided and the response to each ion was observed in the absence of any other ion. The use of a mixed ionophore membrane electrode containing three ionophores for sodium, potassium and calcium ions in an ion sensing array has been reported by Forster and Diamond.[1] The mixed membrane electrode was used in conjunction with single ionophore electrodes for the individual cations and a conventional reference electrode.

Dual ionophore membranes containing a hydrogen ion-selective ionophore and a second ionophore have been investigated by Bakker and Pretsch.[2] The response of the membrane to the second primary ion at high pH was used to determine the stability constants of the ionophore-ion complexes, using a model based on a displacement mechanism of hydrogen ions by the second primary ion. The response of the mixed ionophore membrane is modelled only for the situation in which the concentration of one ion is orders of magnitude greater than that of the other ion, so that the electrode responds only to the ion at high concentration.

US 4,762,594 and US 4,946,562 describe the use of a first sensor sensitive to a first and second species, a second sensor sensitive to the first species and a third sensor sensitive to the second species, to provide a means of determining unknown concentrations of the first and second species in a sample. It is unclear how the sensors are formulated. The mathematical description of the responses of these three sensors implies a Nernstian response to each of two species at the sensor sensitive to two species, but the precise mechanism is unclear.

**Summary of the invention**

The invention provides the use of a sensor with a polymeric membrane comprising a polymer, a lipophilic salt and at least two ionophores selective for different chemical species as a pseudo reference sensor selective for multiple species.

The polymeric membranes are useful in ion selective electrode measurement involving the use of species sensitive membranes in conventional electrode formats with an inner filling solution or for use as solid-contact electrodes. Alternatively, the species sensitive polymeric membranes according to the invention may be used in other formats that are suitable for single ionophore potentiometric sensing membranes. The sensors may be used immersed into solution, either in a flowing stream or stop-flow mode, or in a flow-free method such as a dip-stick type sensor or sensors where a drop of blood is applied to the surface. The polymeric membranes are preferably used in a potentiometric ion sensitive measurement.

A polymeric membrane may optionally comprise a plasticiser. A polymeric membrane of the invention without plasticiser suitably comprises from 85 to 95 % by weight of polymer, preferably from 95 to 99 % by weight and more preferably from 98 to 99 % by weight.

The membrane suitably comprises from 0.1 to 5.0 % by weight of lipophilic salt, preferably from 0.1 to 1 % by weight, more preferably from 0.25 to 0.6% by weight. The membrane may also comprise a total amount of from 0.1 to 10 % by weight of ionophore, preferably from 0.5 to 2.0 % by weight, more preferably from 1.0 to 2.0 % by weight, most preferably from 1.2 to 1.8 % by weight.

The polymer is suitably chosen from polyvinyl chloride (PVC) or derivatives or copolymers thereof, polyurethane, cellulose derivatives or copolymers thereof, including cellulose acetate and ethyl cellulose, silicone rubber, alkyl methacrylates and derivatives or copolymers thereof, polystyrene or derivatives or copolymers thereof, poly(vinylidene) chloride, polysiloxanes and mixtures of these polymers. Suitable derivatives of PVC include carboxylated PVC or aminated PVC. The polymer is preferably PVC or a copolymer or derivative thereof, and is most preferably PVC.

The polymeric membrane may also include a plasticiser. Suitable plasticisers include bis(2-ethylhexyl)sebacate (DOS), 2-nitrophenyl octylether (NPOE), tris(2-ethylhexyl)phosphate, dibutyl sebacate, dioctyl sebacate, bis(2-ethylhexyl)adipate, bis(2-ethylhexyl)phthalate and dioctylphenylphosphonate. Mixtures of plasticizers may also be used. The type of plasticizer used in the membrane may be chosen, taking into account the composition of the particular polymer. For example, a combination of PVC polymer with DOS or NPOE may be used in the membrane of the invention. The plasticiser may influence the relative rates of partitioning into the membrane of the species to be sensed.

The plasticiser, when included, may be present in an amount of from 40 to 80 % by weight, preferably from 60 to 70 % by weight, more preferably about 66 % by weight. Suitably a plasticised polymeric membrane of the invention comprises from 20 to 60 % by weight, preferably from 30 to 40 % by weight, more preferably from 32 to 34 % by weight of polymer.

The components of the polymeric membrane will total 100 % by weight. The polymeric membrane comprises a lipophilic salt or mixtures of lipophilic salts. The salt may act to stabilise the electrode response and to decrease the membrane resistivity. The lipophilic salt is suitably one in which at least one of the anion and the cation are lipophilic. Examples of suitable salts wherein the lipophilic species is anionic include potassium tetrakis-(4-chlorophenyl) borate (KTCPB), sodium tetrakis (4-fluorophenyl) borate, sodium tetraphenyl borate, and ammonium tetrakis (chlorophenyl) borate. Further quaternary borate salts of the formula $X^+B(R^1R^2R^3R^4)^-$ where $B(R^1R^2R^3R^4)^-$ is a lipophilic borate anion, and $X^+$ is a hydrophilic cation may also be suitable.

Examples of salts wherein the lipophilic species is cationic include tetraoctadecylammonium bromide, tridodecylmethylammonium nitrate, tetradodecylammonium nitrate and tridodecylmethylammonium chloride trioctylpropylammonium chloride. Further quaternary ammonium salts $(R^1R^2R^3R^4)N^+X^-$ where $(R^1R^2R^3R^4)N^+$ is a lipophilic ammonium cation, and $X^-$ is a hydrophilic anion may also be suitable.

Preferably, both the anion and the cation are lipophilic. Examples of suitable salts include tetradodecylammonium tetrakis(4-chlorophenyl) borate (TDDA TCPB), tetrabutylammonium tetraphenylborate, tetraheptylammonium tetraphenylborate and tetraphenyl phosphonium tetraphenylborate. The lipophilic salt is preferably TDDA TCPB.

The polymeric membrane comprises at least two ionophores selective for different chemical species. Suitable ionophores may be chosen from those selective for sodium, potassium, lithium, hydrogen,calcium, magnesium and ammonium ions.

Ionophores that may be used to confer sensitivity onto the sensor include valinomycin, 4-tert-butylcalix[4]-arene-tetracetic acid tetraethylester (commonly known as sodium ionophore X), nonactin, crown ethers, calixarenes, trialkylamines and phosphate esters. Suitable ionophores and the sensitivities they confer include:

valinomycin, bis[(benzo-15-crown-4)-4'-ylmethyl] pimelate (commonly known as potassium ionophore II) or 2-dodecyl-2-methyl-1,3-propanedi-yl-bis [N-(5'-nitro(benzo-15-crown-5) (commonly known as BME 44) for potassium ion response,

4-tert-butylcalix[4]arene-tetracetic acid tetraethylester (commonly known as sodium ionophore X), methoxyethyltetraester calix[4]arene (commonly known as METE), or derivatives of monensin for sodium ion response,

N,N-diheptyl-N',5,5-tetramethyl-3,7-dioxanonoanediamide (commonly known as lithium ionophore I) for lithium ion response,

octadecyl isonicotinate (commonly known as hydrogen ionophore IV or ETH 1778) or 4-nonadecylpyridine (commonly known as hydrogen ionophore II or ETH 1907) for hydrogen ion response,

calcimycin (commonly known as calcium ionophore III) or N,N-dicyclohexyl-N',N'-dioctadecyl-3-oxapentanamide (commonly known as calcium ionophore IV) for calcium ion response,

N,N"-octamethylenebis(N'-heptyl-N'-methylmalonamide (commonly known as magnesium ionophore III or ETH 4030) for magnesium ion response, and

nonactin (commonly known as ammonium ionophore I) for ammonium ion response.

The total quantity of ionophore contained in a mixed ionophore membrane should be similar to the quantity contained within a conventional single ionophore membrane. High ionophore concentrations can lead to unpredictable responses.

The mixed ionophore membrane comprises at least two ionophores. The membrane may include 2, 3, 4, 5 or even 6 ionophores, preferably 2, 3 or 4, more preferably 2 or 3, most preferably 2.

The polymeric membrane is suitably prepared using known techniques for preparing polymeric membranes, for example, by dissolving the component materials in an organic solvent such as cyclohexanone or tetrahydrofuran. Other solvents or mixtures of solvents may be used. The membrane solution so formed may then be deposited manually or by an automated dispensing method onto an underlying conducting structure. The solvent is allowed to evaporate to obtain the plasticized sensing membrane.

The underlying conducting structure onto which the membrane solution may be deposited includes, but is not limited to carbon pellets or rods, screen printed conducting layers or microfabricated structures. The membrane solution may be deposited onto conducting surfaces which have been chemically modified to reduce the drift of the sensor response or to provide a stable potential at the inner interface. These may include, but are not limited to modifications with silver/silver chloride, with a redox couple or with a conducting polymeric layer. Further, the underlying surfaces may have been treated to improve the adhesion of the polymer membrane or to aid the flow of the membrane solution over the underlying structure.

In an alternative method of preparing the membrane, a membrane solution may be prepared as above and may be used to form a disc of membrane material, commonly by deposition into a support such as a glass ring clamped onto a glass plate. The solvent is evaporated off to obtain the membrane material. A disc of membrane material is then cut and may be used to construct a conventional Philips body type electrode.

The polymeric membrane comprising at least 2 ionophores selective for different chemical species may be used in a pseudo reference sensor. In that case, the pseudo reference sensor preferably comprises at least 2 further polymeric membranes, each comprising a polymer, a lipophilic salt.and one of the at least 2 ionophores. The sensor may be described as a mixed ionophore membrane sensor.

Suitably, in the determination of monovalent cations A and B, a mixed ionophore pseudo-reference sensor according to the invention comprises a first membrane comprising ionophores sensitive to each of A and B, and two individual membranes, one of which comprises an ionophore sensitive to A and the other comprises an ionophore sensitive to B.

Similarly, in the determination of ions A, B and C, the pseudo reference sensor would suitably comprise a first membrane comprising ionophores sensitive to each of A and B, and three individual membranes, one of which comprises an ionophore sensitive to A, another of which comprises an ionophore sensitive to B and the other comprises an ionophore sensitive to C. Alternatively, in the determination of ions A, B and C, the pseudo reference sensor would comprise a membrane comprising ionophores sensitive to each of A, B and C, and three individual membranes, one of which comprises an ionophore sensitive to A, another of which comprises an ionophore sensitive to B and the other comprises an ionophore sensitive to C.

In the mixed ionophore membrane sensor containing two ionophores as described above, the mechanism of generation of a potentiometric response is thought to be in the generation of charge at the aqueous sample/membrane interface on extraction of species from the aqueous sample into the membrane and subsequent formation of a complex with the ionophore. For example, in a membrane containing ionophores $I_A$ and $I_B$, sensitive to primary ions A and B respectively, both ions will partition into the membrane from the aqueous sample and bind preferentially with their respective ionophore to form complexes $I_A.A$ and $I_B.B$.

A conventional single ionophore membrane for sensing a monovalent cation generally has a high molar ionophore concentration in excess of that of the molar quantity of lipophilic salt, where the cation is hydrophilic and the anion is lipophilic. Charge balance is achieved in the bulk of the membrane by formation of sufficient positively charged ionophore:primary ion complex to balance the charge on the anionic additive concentration. The amount of ionophore needed for this charge balance is unable to take part in the potential generating mechanism at the membrane surface.

In the following discussion, mixed ionophore sensors having 2 ionophores in the mixed ionophore membrane are referred to, but the discussion applies equally to membranes comprising more than 2 ionophores.

When a lipophilic ionic additive having both a lipophilic anion and a lipophilic cation, for example TDDA TCPB, is used, all of the ionophore(s) at the membrane surface will generate a potential response on complex formation with the primary ion(s). The amount of complex formation for each ionophore:ion complex is given by:

$$[I_A.A] = K_A \, \beta_{A,A} \, [I_A] a_A \qquad\qquad (1)$$

where $K_A$ is the partition coefficient for ion A from the solution into the membrane, $\beta_{A,A}$ is the complex formation constant for ionophore $I_A$ and ion A, $[I_A]$ is the molar concentration of free ionophore $I_A$ and $a_A$ is the solution activity of ion A. For a membrane containing more than one ionophore, knowledge of the four parameters $K_A$, $\beta_{A,A}$, $[I_A]$ and $a_A$ allows the relative concentrations of each ionophore:ion complex in the membrane to be estimated and the response of the sensing membrane to be tailored to suit particular sensing requirements.

For example, it is possible to obtain membranes that respond primarily to either ion A or to ion B by varying the relative amounts of each ionophore. An initial preliminary estimate of the concentration range of species in a sample may be carried out by any known method, to enable the user to vary the concentrations of the ionophores as necessary. The sensor of the invention can suitably respond over the reportable range for concentrations of sodium and potassium ions in blood, which are in the range of from 100 to 180 mM and from 2 to 9 mM, respectively.

Suitable ratios of ionophore amounts may also be determined by applying knowledge of complex formation constants of the ionophore:ion complexes with the primary ion and with any secondary ions. Methods of determining complex formation constants in polymeric membranes are known in the literature, for example as reported by Bakker and Pretsch[2] and by Mi and Bakker[9].

The effect of the lipophilicity of the polymeric membrane on the partition coefficient may also have some influence. For example, sodium and potassium ions are known to partition more equally into a membrane with a more lipophilic character, such as that including dioctyl sebacate as plasticiser. In contrast, in a membrane including NPOE as plasticiser, potassium ions are known to partition into the membrane to a greater extent than sodium ions.

The sensor response of a mixed ionophore sensing membrane including a lipophilic salt such as TDDA TCPB can be described by one of two equations, depending on the relative amounts of ionophores in the membrane. When ionophores are present at similar molar concentrations, the response of the sensing membrane may be described by the classical Nikolsky Eisenman equation set out below. This type of membrane is referred to below as a Class A membrane. Alternatively, when there is a large difference between the molar concentrations of the ionophores, each type of ionophore can give rise to an independent response. This type of membrane is referred to as a Class B membrane.

For a Class A membrane, which is a mixed ionophore sensing membrane containing similar ionophore concentrations and a lipophilic salt in which both the anion and the cation are lipophilic such as TDDA TCBP, the membrane response can be described by considering the contribution of each ionophore:ion complex. As an example, for a mixed ionophore sensing membrane containing two ionophores $I_A$ and $I_B$ for primary ions A and B, where A and B have the same charge, the sensor response can be described by:

$$E_{mix} = E'_{mix} + \frac{RT}{nF} \ln ( K_A \beta_{A,A} [I_A] a_A + K_B \beta_{B,B} [I_B] a_B + K_B \beta_{A,B} [I_A] a_B + K_A \beta_{B,A} [I_B] a_A )$$

where $E_{mix}$ is the half cell potential of the mixed ionophore membrane, $E'_{mix}$ represents the constant contributions to the potential of the half cell, R is the molar gas constant, T is temperature, n is the charge on the ion and F is the Faraday constant.

This equation can be reduced to the following expression and is equivalent to the Nikolsky Eisenman equation:

$$E_{mix} = E'_{mix} + S_{mix} \log(a_A + K_{A,B}^{mix} a_B)$$

where $S_{mix}$ is the apparent slope of response and $K_{A,B}^{mix}$ is the apparent selectivity coefficient for the mixed ionophore membrane sensor.

It should be noted that the sensor can be modelled with either A or B as the primary ion. Ionophores A and B should be chosen as far as possible so that the concentration of the ionophore:primary ion complex is much greater than the concentration of ionophore:ion complex with the other ion. In other words, each ionophore should exhibit good selectivity for the primary ion of interest.

The apparent selectivity coefficient for a mixed ionophore membrane sensor can be varied considerably by varying the relative amounts of the ionophores in the membrane and also by varying the lipophilicity of the membrane, suitably by using a different plasticizer. In comparison, for a conventional ion-selective membrane containing one ionophore, the selectivity coefficient is determined largely by the ratio of the complex formation constants for the primary ion and the interfering ion with the ionophore of the primary ion.

For a Class B membrane, which can be a mixed ionophore sensing membrane containing ionophores at very different concentrations and a lipophilic salt in which both the anion and the cation are lipophilic such as TDDA TCBP , the response does not obey the classical Nikolsky Eisenman equation seen above with the Class A membrane. Instead, the individual ionophores appear to act relatively independently, possibly due to discrete groups of each ionophore forming separately in the membrane. As an example, for a mixed ionophore sensing membrane containing two ionophores $I_A$ and $I_B$ for primary ions A and B, where A and B have the same or similar charge, the sensor response can be described by:

$$E_{mix} = E'_{mix} + S_{A,mix} \log(a_A) + S_{B,mix} \log(a_B) \qquad (2)$$

where $S_{A,mix}$ and $S_{B,mix}$ are the apparent slopes of response to A and B, and all other terms have the same meaning as before. The responses due to ionophores A and B are assumed to be described by the terms $S_{A,mix} \log(a_A)$ and $S_{B,mix} \log(a_B)$ respectively. The degree of complex formation of each ionophore with its primary ion can be considered as described above to estimate the relative contribution of each ionophore to the sensor response. Variation of the relative amounts of the ionophores can result in sensor responses with different apparent slopes of response ($S_{A,mix}$ and $S_{B,mix}$) to ions A and B.

Varying the relative amounts of two ionophores in a series of sensing membranes can result in a transition from a Class B membrane to a Class A membrane, as the ionophore concentrations become more equal. The range of sensor responses obtained by varying the relative amounts of ionophore allows selection of the optimum membrane composition for a particular application.

A third class of mixed ionophore sensing membrane, Class C, can also be described, in which the membrane comprises more than one ionophore and an anionic additive in which only one of the anion and the cation is lipophilic, such as KTCPB. In this class of membrane, the charge balance between the ionophore:ion complex and the anionic additive means that some of the ionophore is not available for signal generation at the aqueous solution/membrane interface. The relative contribution of each of the ionophore:primary ion complexes to the charge balance with the anionic additive will depend on the relative concentrations of each ionophore:primary ion complex. Estimation of these concentrations can be made as described above (equation (1)). For a mixed ionophore sensing membrane used in flow analysis, where the membrane is exposed to a constant carrier solution composition between samples, exposure to constant primary ion concentrations in the carrier can result in relatively constant concentrations of ionophore:primary ion complexes involved in charge balance with the anionic additive. Consequently the amount of ionophore of each type that is free and capable of charge generation at the solution/membrane interface will be relatively constant.

The potentiometric response of Class C sensing membranes is identical to that for Class B membranes, where the Nikolsky Eisenman equation is not obeyed and each ionophore apparently responds independently to their primary ion, as described by equation (2).

The description of mixed ionophore sensing membranes of Classes A, B and C is not assumed to be inclusive. Mixed ionophore sensing membranes of compositions other than those described above are possible. For example, membranes comprising more than two ionophores, membranes comprising ionophores for ions of different charge (e.g. $A^+$ and $B^{2+}$), or membranes comprising ionophores which form complexes other than 1:1 complexes with an ion. Other types of potentiometric response could also be determined on experimentation.

If one of A and B is a hydrogen ion, the sensor could monitor the pH of the solution. One of the ionophores in the mixed ionophore pseudo-reference electrode would then be a hydrogen ionophore. In that case, particular care should be taken to match the amounts of complex formation of the two ionophores, since the complex formation constants of hydrogen ion ionophores are frequently very high.

The three sensor system of single ionophore sensors for A and B and a mixed ionophore sensor for both A and B can be used as a reference system for other potentiometric sensors. For each additional species, a species specific sensor is required and the potential of that sensor is measured against that of the mixed ionophore sensor. Additional sensors might be species specific sensors that use a single ionophore specific for that species, or might be a potentiometric biosensor such as a urea sensor based on the immobilization of urease onto an ammonium ion sensitive sensor. The three sensor reference system could also be usefully employed in an array of potentiometric sensors, in particular in a miniaturized sensor array.

## Mixed ionophore membrane sensors as pseudo-reference electrodes

In the conventional potentiometric measurement of the monovalent cations A and B, a conventional reference electrode of fixed potential such as a silver/silver chloride reference is used in conjunction with individual single ion sensing electrodes for each of ions A and B. The responses of the ion selective electrodes for each of ion A and B are described by the Nikolsky Eisenman equation:

$$E_A = E_A^{'} + \frac{RT}{nF} \ln(a_A + K_{A,B}^{pot} a_B)$$

and

$$E_B = E_B^{'} + \frac{RT}{nF} \ln(a_B + K_{B,A}^{pot} a_A) \, .$$

where $K_{A,B}^{pot}$ is the selectivity coefficient for ion A against ion B and $K_{B,A}^{pot}$ is the selectivity coefficient for ion B against ion A.

In comparison, in the determination of the monovalent cations A and B with the mixed ionophore pseudo-reference electrode of the invention, three sensors are required: two individual sensors responsive to A and B which each use a single ionophore selective for the primary species, and a third sensor responsive to both A and B which uses two ionophores, each selective for one of the primary ions. The measured response at sensor A is the difference in response of sensor A and the pseudo-reference electrode:

$$E_{A,mix} = E_A - E_{mix}$$

where $E_{A,mix}$ is the measured response at sensor A, $E_A$ is the potentiometric sensor response of sensor A described by the Nikolsky Eisenman equation and $E_{mix}$ is the mixed ionophore membrane sensor response. Similarly the response at sensor B is described by:

$$E_{B,mix} = E_B - E_{mix}.$$

The mixed ionophore sensing membrane of the invention may be optimized as described above to give adequate measured responses to both ions over the range of concentrations of interest.

To determine unknown ion activities A and B in a sample, the three sensor system of the invention can be exposed to the sample and then to a known calibrant, or alternatively may be exposed to a calibrant and then to the sample. If the mixed ionophore membrane sensor has a Class A type membrane, then the measured response at sensor A to a calibrant containing A and B at known concentrations, $A_1$ and $B_1$ is:

$$E_{A_1,mix} = E'_{A_1,mix} + S_A \log(a_{A_1} + K_{A,B}^{pot} a_{B_1}) - S_{mix} \log(a_{A_1} + K_{A,B}^{mix} a_{B_1})$$

where $S_A$ is the apparent slope of response to A at the single ionophore electrode. The measured response at sensor A to a sample containing A and B at unknown concentrations $A_2$ and $B_2$ is:

$$E_{A_2,mix} = E'_{A_2,mix} + S_A \log(a_{A_2} + K_{A,B}^{pot} a_{B_2}) - S_{mix} \log(a_{A_2} + K_{A,B}^{mix} a_{B_2})$$

Then for sensor A, the difference in potential response to calibrant and sample is:

$$E_{A_2,mix} - E_{A_1,mix} = E'_{A_2,mix} + S_A \log(a_{A_2} + K_{A,B}^{pot} a_{B_2}) - S_{mix} \log(a_{A_2} + K_{A,B}^{mix} a_{B_2})$$
$$- E'_{A_1,mix} - S_A \log(a_{A_1} + K_{A,B}^{pot} a_{B_1}) + S_{mix} \log(a_{A_1} + K_{A,B}^{mix} a_{B_1})$$

Assuming $E'_{A2,mix} = E'_{A1,mix}$,

$$E_{A_2,mix} - E_{A_1,mix} = S_A \log(a_{A_2} + K_{A,B}^{pot} a_{B_2}) - S_{mix} \log(a_{A_2} + K_{A,B}^{mix} a_{B_2})$$
$$- S_A \log(a_{A_1} + K_{A,B}^{pot} a_{B_1}) + S_{mix} \log(a_{A_1} + K_{A,B}^{mix} a_{B_1}) \qquad (3)$$

A similar expression is obtained for sensor B:

$$E_{B_2,mix} - E_{B_1,mix} = S_B \log(a_{B_2} + K_{B,A}^{pot} a_{A_2}) - S_{mix} \log(a_{A_2} + K_{A,B}^{mix} a_{B_2})$$
$$- S_B \log(a_{B_1} + K_{B,A}^{pot} a_{A_1}) + S_{mix} \log(a_{A_1} + K_{A,B}^{mix} a_{B_1}) \qquad (4)$$

For the three sensor system of the invention, where the constant values that characterise the sensor responses are known (i.e. the slope values and real and apparent selectivity coefficients), equations (3) and (4) can be solved for unknown sample activities A and B using an iterative procedure, such as that of Solver in Microsoft Excel. The equations can also be simplified by optimisation of the membrane compositions of the single ionophore sensors so that the selectivity coefficient term in the Nikolsky Eisenmann equation is negligible, i.e. there is negligible response due to the interferent ion in the primary ion concentration range.

Alternatively, if the mixed ionophore membrane sensor has a Class B type membrane, then the measured response at sensor A to a calibrant containing A and B at known concentrations $A_1$ and $B_1$ is:

$$E_{A_1,mix} = E'_{A_1,mix} + S_A \log(a_{A_1} + K^{pot}_{A,B} a_{B_1}) - S_{A,mix} \log(a_{A_1}) - S_{B,mix} \log(a_{B_1})$$

The measured response at sensor A to a sample containing A and B at unknown concentrations $A_2$ and $B_2$ is:

$$E_{A_2,mix} = E'_{A_2,mix} + S_A \log(a_{A_2} + K^{pot}_{A,B} a_{B_2}) - S_{A,mix} \log(a_{A_2}) - S_{B,mix} \log(a_{B_2})$$

Then for sensor A, the difference in potential response to the calibrant and the sample is:

$$E_{A_2,mix} - E_{A_1,mix} = S_A \log(a_{A_2} + K^{pot}_{A,B} a_{B_2}) - S_{A,mix} \log(a_{A_2}) - S_{B,mix} \log(a_{B_2})$$
$$- S_A \log(a_{A1} + K^{pot}_{A,B} a_{B_1}) + S_{A,mix} \log(a_{A_1}) + S_{B,mix} \log(a_{B_1})$$

$$= S_A \log(a_{A_2}/a_{A_1}) - S_{A,mix} \log(a_{A_2}/a_{A_1}) - S_{B,mix} \log(a_{B_2}/a_{B_1}) \qquad (5)$$

where the assumption is made that the constant cell terms and the selectivity coefficient term for the sensor are negligible. A similar expression is obtained for sensor B:

$$E_{B_2,mix} - E_{B_1,mix} = S_B \log(a_{B_2}/a_{B_1}) - S_{A,mix} \log(a_{A_2}/a_{A_1}) - S_{B,mix} \log(a_{B_2}/a_{B_1}) \qquad (6)$$

For the three sensor system where the constant values that characterise the sensor responses are known (i.e. the slope values), equations (5) and (6) can be solved for unknown sample activities A and B by simple arithmetical manipulation of the equations. Alternatively, if the selectivity coefficient term for the response of sensor A and/or B is not negligible, the equations can be solved by an iterative procedure such as that referred to above.

The sensor characteristics such as slope of response and real and apparent selectivity coefficients for the single ionophore and mixed ionophore sensors can be determined prior to exposure to a sample containing unknown activities of ions A and B. In mass production of sensors, manufacture of sensors with reproducible responses is possible and calibration of a selection of sensors from each batch should give small variation in the sensor characterstics. For the mixed ionophore membrane sensors, the ratio of the molar quantities of the ionophores determines the magnitude and type of sensor response to the primary ions for the ionophores. Consequently the ratio of molar quantities should be accurately determined on preparation of the membrane solution.

### Description of figures

Figure 1 is a sketch of a potentiometric flow cell prepared using a polymeric membrane as described herein.

Figure 2 shows a cross-section of a pseudo reference sensor as described herein. The carbon pellet (1) is inserted into the lower polymethylmethacrylate block (2) so that the top edge of the pellet is level with the bottom of the recess (3). An ion-sensing membrane as described herein covers the top of the pellet and fills the recess (4).

Figure 3 shows the real time responses of sodium and potassium ion selective sensors to changes in concentrations of sodium and potassium ions. The pseudo reference electrode used in the measurement comprises a mixed ionophore membrane sensor as described herein in which the mixed ionophore membrane comprises valinomycin and sodium ionophore X in a mole ratio of 1:4.

Figure 4 shows plots of measured potential shift (y-axis) vs. calculated potential shift (x-axis) for the responses of (A) sodium and (B) potassium sensors, for the potentiometric responses in Figure 3.

The invention is illustrated by the following non-limiting examples.

## Examples

### Example 1. Flow cell and electrode configuration

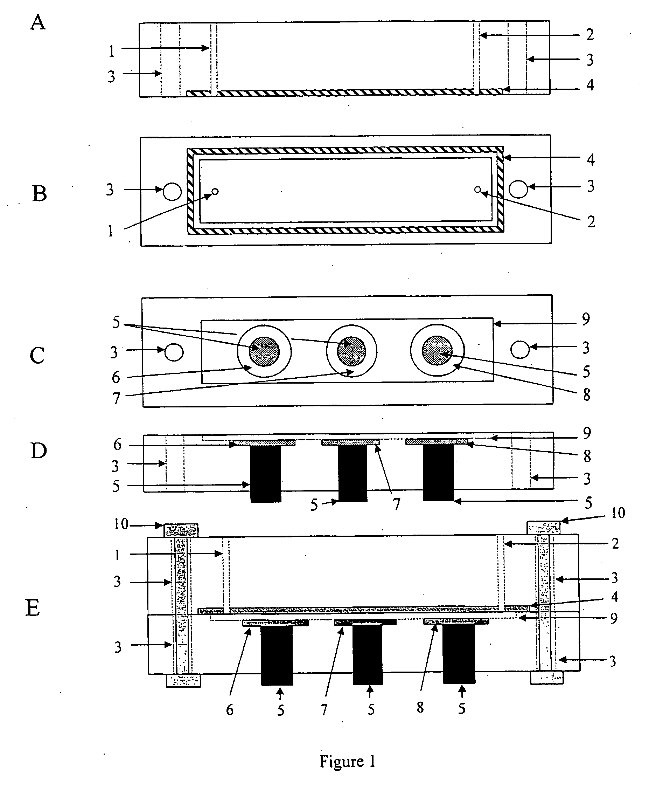

The potentiometric flow cell was supplied by Drew Scientific, Cumbria, U.K. Figure 1 shows a sketch of the flow cell, including the sensors.

The cell is made from polymethacrylate and consists of an upper part shown from the side (A) and from the bottom (B), and a lower part shown from the top (C) and from the side (D). The upper part (A,B) contains an inlet (1) and an outlet (2) for fluid flow, two holes (3) for bolts and a rubber O-ring seal (4). The lower part (C,D) contains carbon rods (5) of about 1mm diameter and 2mm length, inserted so that the top of the carbon rod is level with the bottom of the recesses (6, 7 and 8). The recesses are 2mm diameter, centred on the centre of the carbon rod and have a depth of 0.1 mm. The recesses are filled with ion-sensing membrane solution (such as those prepared in Example 2 below). Suitably recess (6) contains a potassium sensing membrane, recess (7) contains a mixed ionophore membrane (sodium and potassium) and recess (8) contains a sodium sensing membrane. The bottom block has a channel (9) of 0.2mm depth, the bottom of which is level with the recess, and two holes (3) for bolts. The top and bottom blocks are clamped together by means of nuts and bolts (10) to form the flow cell (E). Electrical contact was made to the back face of the pellets.

### Example 2. Preparation of sensors for sodium and potassium ion sensing Sodium ion sensing membrane formulation

PVC (33 %), NPOE (66.25 %) and sodium tetrafluorophenylborate (0.15 %) were weighed into a glass vial and dissolved in 0.5 mL cyclohexanone by heating at 60°C for 1 hour. The percentage by weight of each membrane component is expressed in terms of weight per total weight of membrane components. To this mixture was added 0.6 % METE (methoxyethyl tetraester calixarene) and the mixture was stirred for a further hour. The total weight of the membrane components was 0.17g.

### Potassium ion sensing membrane formulation

PVC (33 %), bis(2-ethylhexyl) sebacate (64.5 %) and KTCPB (0.5 %) were weighed into a glass vial and dissolved in 0.5 mL cyclohexanone by heating at 60°C for 1 hour. To this mixture was added valinomycin (2.0 %) and the mixture was stirred for a further hour. The total weight of the membrane components was 0.17g.

### Mixed ionophore membrane formulation

PVC (32.5 %), TDDA TCPB (0.57 %) and dioctyl sebacate (65.4 %) were weighed into a glass vial and dissolved in 0.5 mL cyclohexanone by heating at 60°C for 1 hour. To this mixture was added valinomycin (0.33 %) and sodium ionophore X (1.2 %) and the mixture was stirred for a further hour. The total weight of the membrane components was 0.17g.

### Membrane deposition

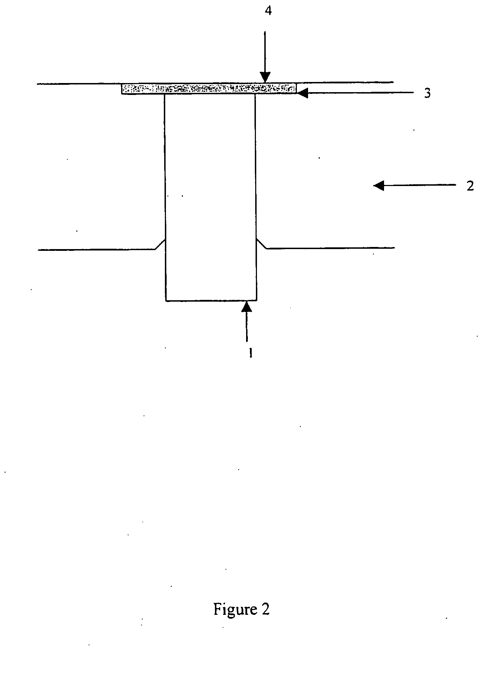

For each sensor, 2 aliquots of 0.8 microlitres of the membrane formulation were pipetted in quick succession into the recess above the carbon pellet. The solvent was allowed to evaporate overnight before use. The volume of membrane formulation was sufficient to fill the recess. The sensor is shown in cross-section in Figure 2.

**Example 3. Pseudo-reference electrode for sodium and potassium ion sensors**

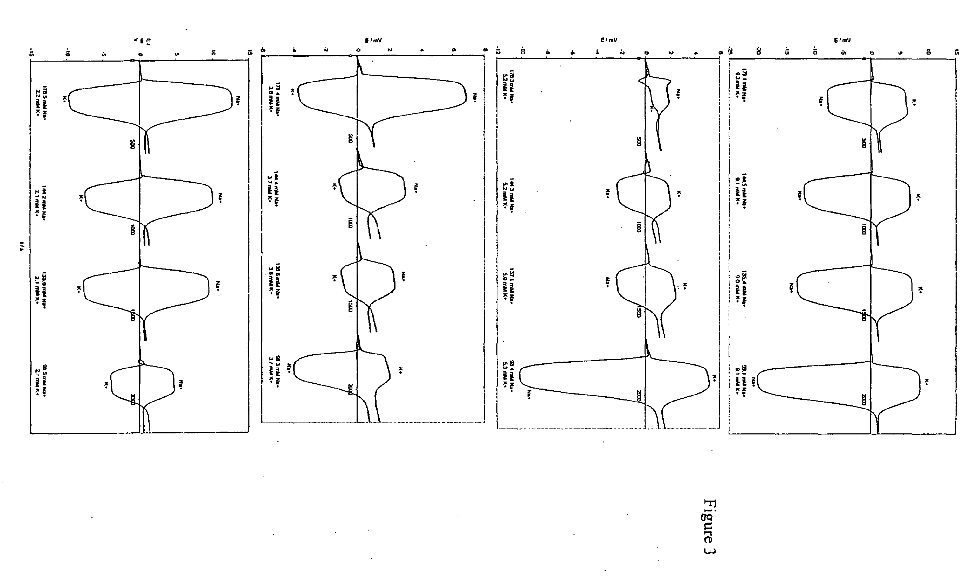

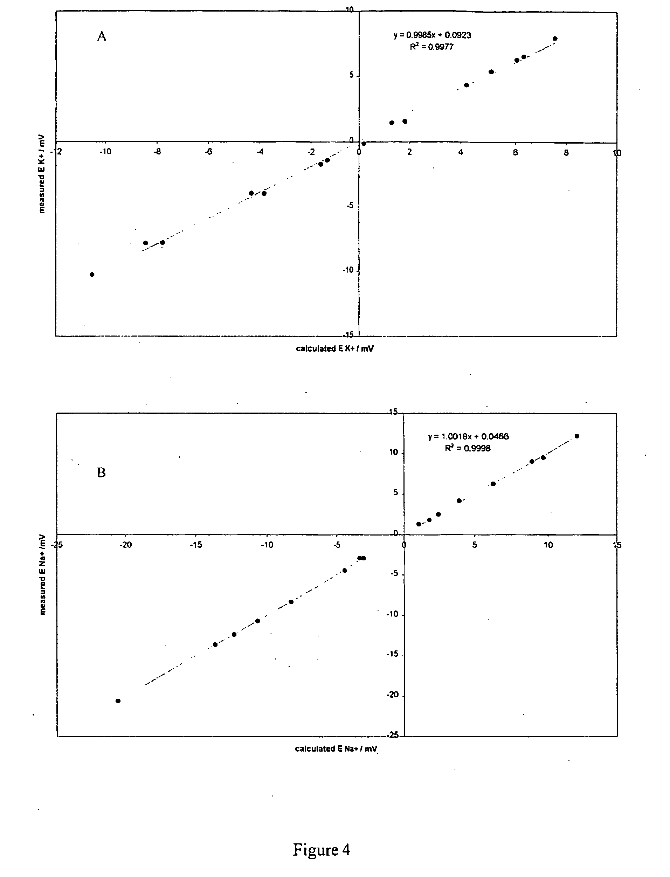

Flow analysis was used to determine the response of the sensors to sodium and potassium ion activity over the ranges found in whole blood. Figure 3 shows the response of the sensors to injections of sample. The predicted potential shift vs. the actual potential shift is shown in Figure 4.

The membranes used in the pseudo reference electrode are prepared as set out in Example 2. The sensors were used in the flow cell of Figure 1, at a flow rate of 120 uL/min with a sample loop size of 300 uL. The carrier composition was 40 mM bis tris (pH 6.95), 0.8 mM $Na_2EDTA$, 140.4 mM NaCl and 4.2 mM KCl. The calibrants were prepared from a buffer containing 40 mM bis tris (pH 6.95) and 0.8 mM $Na_2EDTA$, and had varying amounts of NaCl and KCl to give the total Na+ and K+ concentrations shown in Figure 3. The concentrations of sodium and potassium ions were chosen to give all combinations of upper and lower limits of reference and reportable ranges for the two ions in whole blood.

The mixed ionophore sensing membrane was a Class A type membrane, and the response was modelled according to the Nikolsky Eisenman equation, with potassium as the primary ion and sodium as the interferent ion. The single ionophore sensor responses were assumed to have negligible contributions from the selectivity coefficient terms i.e. negligible response to the secondary ion. The constant terms describing the characteristics of the sensors were determined using Solver in Microsoft Excel. For each sensor and each calibrant, the predicted potential shifts were calculated using the modelled sensor responses, and the square of the difference between the observed potential shift and the predicted potential shift was calculated. Using initial slope values of 60 mV/decade and an initial apparent selectivity coefficient value of 1, the sum of the squares of the potential differences was minimised using Solver by varying the slope values and the apparent selectivity coefficient value. The single ionophore sensor slopes were determined to be 57.70 and 57.14 mV/decade for the sodium and potassium sensors, respectively. For the mixed ionophore sensor, the apparent slope of response was 51.63 mV/decade and apparent selectivity coefficient was 0.014. The sum of the squares of the potential differences was 1.51 (potential values in mV).

**Example 4. Mixed ionophore sensing membranes for sodium and potassium**

The effect of the mole ratio of valinomycin to sodium ionophore X can be demonstrated by varying the mole ratio while keeping the concentration of sodium ionophore X approximately constant. Sodium and potassium membrane formulations are described in Example 2. Mixed ionophore membrane formulations contained approximately the same percentage by weight of PVC, NPOE, TDDA TCPB and ionophores. The precise membrane compositions are given below in Table 1.

Calibration of the sensors was performed using the multicalibrant experiment outlined in Example 3, with the mixed ionophore sensing membrane acting as a pseudo-reference electrode for the two single ionophore sensors. The sensor responses were analysed by considering the mixed ionophore sensing response as either a Class A type membrane or a Class B type membrane. The goodness of fit of each model was determined by minimising the sum of the square of the residuals (SSR) between the predicted sensor responses and the actual measured sensor responses, using Solver in Microsoft Excel. The responses of the sodium and potassium sensors were described by the slope values $S_{Na}$ and $S_K$, assuming negligible responses to the secondary ion. For the mixed ionophore sensing membrane, Class A type response was described by $S_{mix}$ and $K_{mix}$, the apparent slope of response and the apparent selectivity coefficient, modelled with potassium as the primary ion and sodium as the interferent ion. Class B type response was described by $S_{Na,mix}$ and $S_{K,mix}$, the apparent slopes of response to sodium and potassium ion activities respectively. It is apparent from Table 2 that the response of the mixed ionophore sensing membrane changes from Class A to Class B as the amount of valinomycin in the membrane is decreased.

Table 1. Membrane compositions for mixed ionophore sensing membranes containing valinomycin and sodium ionophore X, using the lipophilic additive TDDA TCPB.

| | mole ratio of valinomycin : sodium ionophore X | | | |
| --- | --- | --- | --- | --- |
| | 1:30 | 1:22 | 1:8.7 | 1 :4 |
| % by weight | | | | |
| PVC | 32.46 | 32.67 | 32.67 | 32.60 |
| NPOE | 65.60 | 66.09 | 66.09 | 66.00 |
| TDDA.TCPB | 0.57 | 0.60 | 0.60 | 0.60 |
| Valinomycin | 0.05 | 0.06 | 0.12 | 0.34 |

(continued)

| | mole ratio of valinomycin : sodium ionophore X | | | |
| --- | --- | --- | --- | --- |
| | 1:30 | 1:22 | 1:8.7 | 1 :4 |
| % by weight | | | | |
| sodium ionophore X | 1.26 | 1.20 | 1.14 | 1.20 |

Table 2. Sensor response characteristics for sodium, potassium and mixed ionophore sensors of the compositions given in Table 1, using the mixed ionophore sensor as the pseudo reference electrode.

| mole ratio of valinomycin: NaX | 1 : 30 | 1 : 22 | 1 : 8.7 | 1 : 4 |
| --- | --- | --- | --- | --- |
| **CLASS A** | | | | |
| $S_{Na}$ | 57.89 | 56.14 | 54.66 | 58.18 |
| $S_K$ | 56.03 | 56.26 | 56.48 | 56.52 |
| $S_{mix}$ | 47.82 | 47.40 | 33.26 | 44.46 |
| $K_{mix}$ | 0.26 | 0.12 | 0.03 | 0.01 |
| SSR | 12.12 | 16.69 | 7.18 | 5.21 |
| **CLASS B** | | | | |
| $S_{Na}$ | 57.85 | 56.77 | 56.89 | 59.97 |
| $S_K$ | 57.41 | 57.63 | 56.83 | 53.01 |
| $S_{Na,mix}$ | 41.55 | 36.23 | 19.49 | 9.37 |
| $S_{K,mix}$ | 6.91 | 12.05 | 16.85 | 34.2 |
| SSR | 2.73 | 2.48 | 6.24 | 34.21 |

**Example 5. Mixed ionophore sensing membranes for sodium and potassium containing KTCPB**

The effect of the mole ratio of valinomycin to sodium ionophore X is demonstrated for mixed ionophore membrane formulations using the anionic additive KTCPB. The membranes were prepared with approximately the same percentage by weight of PVC, NPOE, KTCPB and ionophores. Sodium and potassium membrane formulations are described in Example 2. The mixed ionophore membrane compositions are given below in Table 3.

Calibration of the sensors was performed using the multicalibrant experiment outlined in Example 3, with the mixed ionophore sensing membrane acting as a pseudo-reference electrode for the two single ionophore sensors. The sensor responses were analysed by considering the mixed ionophore sensing response as either a Class A type membrane or a Class B type membrane, as in Example 4. It is apparent from Table 4 that the response of these mixed ionophore sensing membranes containing the lipophilic anionic additive KTCPB is best described by the expression for a Class B type membrane. The majority of the valinomycin is taken up by charge balancing with the TCPB[-] anion, and does not contribute to the response of the sensing membrane. Consequently the much higher concentrations of valinomycin in these membranes compared to those in Example 4 still enable a dual response to sodium and potassium ions to be obtained.

Table 3. Membrane compositions for mixed ionophore sensing membranes containing valinomycin and sodium ionophore X, using the lipophilic anionic additive KTCPB.

| | mole ratio of valinomycin : sodium ionophore X | |
| --- | --- | --- |
| | 1:1.13 | 1:1.61 |
| % by weight | | |
| PVC | 32.60 | 32.50 |
| NPOE | 65.75 | 65.55 |
| KTCPB | 0.25 | 0.25 |
| Valinomycin | 0.70 | 0.70 |
| Sodium ionophore X | 0.70 | 1.00 |

Table 4. Sensor response characteristics for sodium, potassium and mixed ionophore sensors of compositions given in Table 3, using the mixed ionophore sensor as the pseudo reference electrode.

| mole ratio of Valinomycin: NaX | 1 : 1.13 | 1 : 1.61 |
| --- | --- | --- |
| **CLASS A** | | |
| $S_{Na}$ | 50.50 | 49.23 |
| $S_K$ | 60.01 | 61.49 |
| $S_{mix}$ | 46.53 | 50.13 |
| $K_{mix}$ | 0.01 | 0.03 |
| SSR | 41.21 | 234.90 |
| **CLASS B** | | |
| $S_{Na}$ | 64.53 | 63.56 |
| $S_K$ | 59.85 | 65.27 |
| $S_{Na,mix}$ | 21.60 | 37.77 |
| $S_{K,mix}$ | 38.24 | 28.75 |
| SSR | 5.32 | 8.67 |

**References**

1. R. J. Forster, and D. Diamond, *Analytical Chemistry*, **1992,** *64,* 1721-1728.
2. E. Bakker and E. Pretsch, *Analytical Chemistry,* **1998,** *70,* 295-302.
3. W. E. Morf, and N. F. de Rooij, *Electroanalysis*, **1997,** *9,* 903-907.
4. K. Eine, S. Kjelstrup, K. Nagy, and K. Syverud, *Sensors and Actuators B,* **1997,** *44*, 381-388.
5. Y. Mi, S. Mathison, and E. Bakker, *Electrochemical and Solid-State Letters,* **1999,** *2*, 198-200.
6. H. J. Lee, U. S. Hong, D. K. Lee, J. H. Shin, H. Nam and G. S. Cha, *Analytical Chemistry,* **1998,** *70,* 3377-3383.
7. K. S. Lee, J. H. Shin, M. J. Cha, M. Trojanowicz, D. Liu, H. D. Goldberg, R. W. Hower and R. B. Brown, *Sens. Actuators B,* **1994**, *20*, 239-246.
8. E. Bakker, *Electroanalysis,* **1999,** *11*, 788-792.
9. Y. Mi and E. Bakker, *Anal. Chem., 71,* **1999**, 5279-5287.

**Claims**

1. Use of a sensor comprising a polymeric membrane comprising a polymer, a lipophilic salt and at least two ionophores selective for different chemical species as a pseudo reference sensor selective for multiple species.

2. Use according to claim 1, for a potentiometric ion sensitive measurement.

3. Use according to claim 1 or 2, wherein in the lipophilic salt, at least one of the anion and the cation is lipophilic.

4. Use according to claim 3, wherein the lipophilic salt is chosen from potassium tetrakis-(4-chlorophenyl)borate (KTCPB), sodium tetrakis (4-fluorophenyl) borate, sodium tetraphenyl borate, ammonium tetrakis (chlorophenyl) borate, quaternary borate salts of the formula $X^+B(R^1R^2R^3R^4)^-$, wherein $B(R^1R^2R^3R^4)^-$ is a lipophilic borate anion and $X^+$ is a hydrophilic cation, tetraoctadecylammonium bromide, tridodecylmethylammonium nitrate, tetradodecylammonium nitrate, tridodecylmethylammonium chloride, trioctylpropylammonium chloride or mixtures thereof.

5. Use according to claim 1 or 2, wherein in the lipophilic salt, both the anion and the cation are lipophilic.

6. Use according to claim 5, wherein in the lipophilic salt is chosen from tetradodecylammonium tetrakis(4-chlorophenyl) borate (TDDA TCPB), tetrabutylammonium tetraphenylborate, tetraheptylammonium tetraphenylborate and tetraphenyl phosphonium tetraphenylborate or mixtures thereof.

7. Use according to any preceding claim, wherein the polymer is chosen from PVC, polyurethane, cellulose acetate, ethyl cellulose, silicone rubber, alkyl methacrylates, poly(vinylidene) chloride, polysiloxanes or derivatives or copolymers thereof.

8. Use according to any preceding claim, wherein the membrane further comprises a plasticiser.

9. Use according to claim 8, wherein the plasticiser is chosen from bis(2-ethylhexyl)sebacate (DOS), 2-nitrophenyl octylether (NPOE), tris(2-ethylhexyl)phosphate, dibutyl sebacate, dioctyl sebacate, bis(2-ethylhexyl) adipate, bis(2-ethylhexyl)phthalate and dioctylphenylphosphonate.

10. Use according to any preceding claim, wherein the at least two ionophores are chosen from ionophores selective for sodium, potassium, lithium, hydrogen, calcium, magnesium and ammonium ions.

**Patentansprüche**

1. Verwendung eines Sensors mit einer Polymermembran, die ein Polymer, ein lipophiles Salz und mindestens zwei Ionophoren selektiv für unterschiedliche chemische Spezien umfasst, als Pseudoreferenzsensor selektiv für mehrere Spezien.

2. Verwendung nach Anspruch 1 für eine potenziometrische ionensensitive Messung.

3. Verwendung nach Anspruch 1 oder 2, **dadurch gekennzeichnet, dass** in dem lipophilen Salz mindestens eines von Anion und Kation lipophil ist.

4. Verwendung nach Anspruch 3, **dadurch gekennzeichnet, dass** das lipophile Salz aus Kaliumtetrakis-(4-chlorphenyl)borat (KTCPB), Natriumtetrakis-(4-fluorphenyl)borat, Natriumtetraphenylborat, Ammoniumtetrakis-(chlorphenyl)borat, quaternären Boratsalzen der Formel $X^+B(R^1R^2R^3R^4)$, wobei $B(R^1R^2R^3R^4)$ ein lipophiles Boratanion ist und $X^+$ ein hydrophiles Kation ist, Tetraoctadecylammoniumbromid, Tridodecylmethylammoniumnitrat, Tetradodecylammonlumnitrat, Tridodecylmethylammonlumchlorid, Trioctylpropylammoniumchlorid oder Mischungen derselben gewählt wird.

5. Verwendung nach Anspruch 1 oder 2, **dadurch gekennzeichnet, dass** in dem lipophilen Salz sowohl das Anion als auch das Kation lipophil sind.

6. Verwendung nach Anspruch 5, **dadurch gekennzeichnet, dass** das lipophile Salz aus Tetradodecylammoniumtetrakis(4-chlorphenyl)borat (TDDA TCPB), Tetrabutylammoniumtetraphyenlborat, Tetraheptylammoniumtetraphenylborat und Tetraphenylphosphoniumtetraphenylborat oder Mischungen derselben gewählt wird.

7. Verwendung nach einem der vorhergehenden Ansprüche, **dadurch gekennzeichnet, dass** das Polymer aus PVC, Polyurethan, Celluloseacetat, Ethylcellulose, Silikongummi, Alkylmethacrylaten, Poly(vinyliden)chlorid, Polysiloxanen oder Ableitungen oder Copolymeren derselben gewählt wird.

8. Verwendung nach einem der vorhergehenden Ansprüche, **dadurch gekennzeichnet, dass** die Membran weiterhin einen Weichmacher umfasst.

9. Verwendung nach Anspruch 8, **dadurch gekennzeichnet, dass** der Weichmacher aus Bis(2-ethylhexyl)sebacat (DOS), 2-Nitrophenyloctylether (NPOE), Tris(2-ethylhexyl)phosphat, Dibutylsebacat, Dioctylsebacat, Bis(2-ethylhexyl)adipat, Bis(2-ethylhexyl)phthalat und Dioctylphenylphosphonat gewählt wird.

10. Verwendung nach einem der vorhergehenden Ansprüche, **dadurch gekennzeichnet, dass** die mindestens zwei Ionophoren aus Ionophoren selektiv für Natrium-, Kalium-, Lithium-, Wasserstoff-, Calcium-, Magnesium- und Ammoniumione gewählt werden,

## Revendications

1. Utilisation d'un capteur comprenant une membrane polymérique comprenant un polymère, un sel lipophile et au moins deux ionophores sélectifs de différentes espèces chimiques comme pseudo-capteur de référence sélectif pour plusieurs espèces.

2. Utilisation selon la revendication 1 pour une mesure potentiométrique sensible aux ions.

3. Utilisation selon la revendication 1 ou 2 dans laquelle dans le sel lipophile, au moins un de l'anion ou du cation est lipophile.

4. Utilisation selon la revendication 3 dans laquelle le sel lipophile est choisi parmi le tetrakis-(4-chlorophényl)-borate de potassium (KTCPB), le tetrakis-(4-fluorophényl)-borate de sodium, le tetraphénylborate de sodium, le tetrakis-(chlorophényl)-borate d'ammonium, des sels borates quaternaires de formule $X^+B(R^1R^2R^3R^4)^-$ dans lesquels $B(R^1R^2R^3R^4)^-$ est un anion borate lipophile et $X^+$ est un cation hydrophile, le bromure de tetraoctadécylammonium, le nitrate de tridodécylméthylammonium, le nitrate de tetradodécylammonium, le chlorure de tridodécylméthylammonium, le chlorure de trioctylpropylammonium et les mélanges de ceux-ci.

5. Utilisation selon la revendication 1 ou 2 dans laquelle, dans le sel lipophile, l'anion et le cation sont tous les deux lipophiles.

6. Utilisation selon la revendication 5 dans laquelle le sel lipophile est choisi parmi le tetrakis-(4-chlorophényl)-borate de tetradodécylammonium (TDDA TCPB), le tetraphénylborate de tetrabutylammonium, le tetraphénylborate de tetraheptylammonium, le tetraphénylborate de tetraphénylphosphonium et les mélanges de ceux-ci.

7. Utilisation selon l'une quelconque des revendications précédentes dans laquelle le polymère est choisi parmi le PVC, le polyuréthane, l'acétate de cellulose, l'éthylcellulose, le caoutchouc de silicone, les méthacrylates d'alkyle, le chlorure de polyvinylidène, les polysiloxanes ou les dérivés ou copolymères de ceux-ci.

8. Utilisation selon l'une quelconque des revendications précédentes dans laquelle la membrane comprend en outre un plastifiant.

9. Utilisation selon la revendication 8 dans laquelle le plastifiant est choisi parmi le sébacate de bis(2-éthylhexyle) (DOS), le 2-nitrophényl-octyléther (NPOE), le phosphate de tris(2-éthylhexyle), le sébacate de dibutyle, le sébacate de dioctyle, l'adipate de bis(2-éthylhexyle), le phtalate de bis(2-éthylhexyle) et le phosphonate de dioctylphényle.

10. Utilisation selon l'une quelconque des revendications précédentes dans laquelle les au moins deux ionophores sont choisis parmi des ionophores sélectifs des ions sodium, potassium, lithium, hydrogène, calcium, magnésium et ammonium.

Figure 1

4

3

2

1

Figure 2

Figure 3

Figure 4